Europäisches Patentamt

European Patent Office

Office européen des brevets

(19)

(11) Numéro de publication : **0 028 194**
**B1**

(12) # FASCICULE DE BREVET EUROPÉEN

(45) Date de publication du fascicule du brevet :
**03.04.85**

(51) Int. Cl.⁴ : **C 05 F 9/04**

(21) Numéro de dépôt : **80401509.7**

(22) Date de dépôt : **23.10.80**

(54) Procédé et dispositif pour le compostage de matières fermentescibles.

(30) Priorité : **23.10.79 FR 7926286**

(43) Date de publication de la demande :
**06.05.81 Bulletin 81/18**

(45) Mention de la délivrance du brevet :
**03.04.85 Bulletin 85/14**

(84) Etats contractants désignés :
**AT BE CH DE GB IT LI LU NL SE**

(56) Documents cités :
**FR-A- 872 189**
**FR-A- 1 548 649**
**FR-A- 2 327 974**
**GB-A- 425 411**
**GB-A- 609 431**
**Le dossier contient des informations techniques présentées postérieurement au dépôt de la demande et ne figurant pas dans le présent fascicule.**

(73) Titulaire : **BUREAU POUR LE DEVELOPPEMENT DE LA PRODUCTION AGRICOLE**
**Société Anonyme d'Economie Mixte dite:**
**202, rue de la Croix Nivert**
**F-75015 Paris (FR)**

**SOCIETE D'ENTREPRISES INDUSTRIELLES INTERNATIONALE**
**Société Anonyme dite 38, avenue de l'Opéra**
**F-75002 Paris (FR)**

(72) Inventeur : **Meunier, Jean**
**23, rue Mouchotte**
**F-94160 Saint Mande (FR)**
Inventeur : **Riaux, Pierre**
**18, rue de Magdebourg**
**F-75016 Paris (FR)**
Inventeur : **Petit, François**
**16, boulevard du Parc**
**F-92200 Neuilly (FR)**

(74) Mandataire : **Nony, Michel**
**Cabinet Nony 29, rue Cambacérès**
**F-75008 Paris (FR)**

Jouve, 18, rue St-Denis, 75001 Paris, France

## Description

La présente invention concerne un procédé de compostage de matière organique fermentescible.

On sait que le problème des déchets et rebuts, en particulier d'origine ménagère, devient de plus en plus difficile à résoudre. Différentes solutions sont actuellement utilisées en fonction notamment de la concentration de l'habitat dans la zone considérée.

Une première solution est celle de la décharge. Elle tend cependant à devenir de plus en plus souvent interdite du fait des problèmes d'hygiène et d'altération de l'environnement qu'elle soulève. De plus les déchets jetés à la décharge ne peuvent plus être d'une utilité quelconque.

Une autre solution consiste à incinérer les déchets et rebuts. Cette solution n'est intéressante que dans la mesure où l'on peut récupérer la chaleur résultant de l'incinération pour le chauffage urbain. Ce procédé est donc plus particulièrement adapté aux zones d'habitats concentrés.

On s'est par contre rendu compte que, du fait de leur haute teneur en matières organiques, ces déchets pouvaient être utiles à l'agriculture. En effet de nombreuses cultures telles que le maraîchage, la viticulture ou l'arboriculture ne restituent pas suffisamment de matières organiques pour leur consommation. Cependant un certain nombre de conditions doivent être remplies pour réaliser à partir de ces déchets un compost utilisable dans l'agriculture.

Actuellement les déchets sont tout d'abord triés afin d'éliminer le plus possible de métaux, cartons, bouteilles, ferrailles, piles, etc. puis ils sont broyés. Le broyage permet d'une part de rendre le verre contenu dans ces déchets inoffensifs et d'autre part de les rendre moins inesthétiques du fait du déchiquetage de produits tels que le carton ou les emballages en P.V.C.

Par ailleurs, il importe de faire fermenter les déchets avant leur réutilisation afin d'en faire un compost mûr. En effet à défaut d'une telle fermentation préalable, la fermentation se produit après l'épandage direct en culture du compost. Il en résulte d'une part une montée en température et d'autre part un pompage de l'azote du sol nuisibles aux cultures.

La solution la plus simple et la plus courante pour obtenir une telle fermentation consiste à disposer les déchets et rebuts en andains. On constate cependant que, dans ce cas, bien que la fermentation ait lieu, la température des matières en cours de fermentation ne dépasse pas 50 °C. On est par conséquent en dessous de la température de pasteurisation qui est de l'ordre de 70 °C et qui permet en particulier de tuer les spores de champignons.

Des dispositifs permettant grâce à une meilleure oxygénation d'atteindre la température de 70 °C nécessaire à la pasteurisation ont déjà été proposés et réalisés. On peut citer par exemple les tours ou silos d'oxygénation qui présentent l'inconvénient d'être des installations volumineuses et coûteuses à l'achat et à l'exploitation, ou les dispositifs du type cage en grillage qui nécessitent d'importantes manutentions.

La présente invention vise notamment à fournir un procédé de compostage de matières organiques fermentescibles plus rapide, plus efficace que les procédés connus et qui ne nécessite que des installations relativement légères, sans dispositif fragile et coûteux d'extraction.

A cet effet, la présente invention propose un procédé de compostage de déchets urbains, caractérisé par le fait qu'il consiste à trier et à broyer ces déchets, à mélanger éventuellement aux déchets triés et broyés de l'eau et/ou d'autres produits organiques, tels que du lisier, de la paille hachée ou des boues de décantation, à placer les déchets ainsi traités dans une cellule de fermentation, et à laisser se produire une fermentation aérobique dans la cellule sans retournement ni déplacement en mesurant les caractéristiques de la matière contenue dans la cellule de fermentation et en insufflant dans cette matière un air à humidité et température modulées en fonction des caractéristiques mesurées de la matière pour élever la température de la matière jusqu'à la température de pasteurisation et la maintenir à cette valeur jusqu'à ce que la matière soit pasteurisée. La température de pasteurisation peut être par exemple de l'ordre de 65 °C à 75 °C. Avantageusement, les déchets broyés sont additionnés d'eau jusqu'à l'obtention de l'humidité optimum pour la fermentation.

On notera que, la matière humidifiée peut être additionnée de produits organiques tels que lisier, sciure, paille hachée, tourbe ou tout autre produit améliorant la qualité du compost final.

Dans ce cas, la matière sera de préférence homogénéisée après son humidification et l'addition des produits organiques.

La matière en fermentation voit aussi sa composition rendue plus constante grâce aux produits d'addition qui atténuent les variations de composition de la matière première.

Par ailleurs, durant la fermentation, l'air peut être insufflé à température et humidité contrôlées, de sorte que, si l'on mesure les caractéristiques de la matière en fermentation, et que l'on modifie en conséquence la température et l'humidité de l'air insufflé, il est possible de corriger les variations journalières ou saisonnières de l'atmosphère.

Par conséquent, dans le procédé selon l'invention, la possibilité de correction de la température et de l'humidité de l'air d'oxygénation insufflé dans la matière en fermentation améliore l'homogénéité du produit par la possibilité donnée aux parties non directement exposées à l'action de l'air de fermenter elles aussi.

La matière homogénéisée voit par la suite sa fermentation régularisée grâce à l'indépendance accrue que procure le procédé vis-à-vis des conditions climatiques extérieures.

Dans les procédés connus, en effet, l'insufflation ou le simple contact de l'air ambiant — froid et sec surtout l'hiver et la nuit — interdisait l'évolution des parties de la matière soumise directement au contact de l'air. Il en résultait une très grande hétérogénéité du produit sur le plan de la fermentation.

L'eau pulvérisée dans l'air insufflé à la base des matières en fermentation est de préférence une eau préchauffée.

Ceci permet d'élever à la fois leur température et leur humidité relative. Ce préchauffage de l'eau peut s'ajouter au recyclage discontinu de l'air chaud chargé d'humidité résultant de la fermentation pour lequel un contrôle de la teneur en gaz carbonique règle le réemploi ou le rejet dans l'atmosphère.

Cette récupération de chaleur pour l'eau injectée dans l'air insufflé, ainsi éventuellement que pour l'eau injectée avant malaxage et pour l'air insufflé lui-même, conduisent non seulement à une homogénéisation de la fermentation, mais également à une montée en température des matières en fermentation qui doit être la plus rapide possible pour que la pasteurisation soit assurée et si possible également la destruction des nématodes.

La fermentation accélérée selon le procédé de l'invention peut durer par exemple 14 jours à la suite de quoi le compost pasteurisé est mis sur aire en andain pour son mûrissement qui peut durer par exemple deux mois.

Le mûrissement est poursuivi en fait jusqu'à l'obtention du rapport Carbone/Azote souhaité. Le produit ainsi obtenu est ensuite tamisé et conditionné.

Outre le procédé ci-dessus, la présente invention concerne également un dispositif pour sa mise en œuvre. Ce dispositif est caractérisé par le fait qu'il comprend des moyens pour réaliser la pasteurisation des matières broyées, ces moyens comprenant des cellules de fermentation et des moyens de circulation d'air dans les cellules, ainsi que des moyens de manutention.

On prévoit de préférence quinze cellules de fermentation.

De plus, ce dispositif comprend de préférence des moyens pour additionner aux matières broyées des boues déshydratées ou différents produits organiques solides et/ou liquides.

Afin d'obtenir un matériau de départ mieux adapté à la fermentation aérobie accélérée du procédé selon l'invention, le dispositif peut comprendre des moyens pour régler l'arrivée d'eau d'humidification, avant malaxage, qui avantageusement, peut être préchauffée par échange de chaleur dans les cellules de fermentation.

Dans une forme de réalisation préférée de l'invention, les moyens d'homogénéisation comportent une enceinte à l'intérieur de laquelle au moins un arbre portant des palettes d'homogénéisation réglables est monté à rotation.

Les cellules de fermentation peuvent par exemple être de forme sensiblement parallélépipédique, une de leurs parois latérales formant une porte par laquelle la matière fermentée peut être extraite.

Elles sont de préférence agencées pour permettre le passage forcé de l'air dans la masse en fermentation, de la matière la plus homogène possible, en évitant les passages préférentiels et les zones privées d'air.

L'extraction peut par exemple se faire à l'aide de chargeurs à godets.

Par ailleurs afin d'obtenir une insufflation d'air homogène dans la masse en fermentation, le sol des cellules de fermentation peut comporter des canalisations d'amenée de l'air à insuffler, encastrées pour ne pas gêner l'extraction simple et rapide des matières fermentées.

De plus afin de corriger les variations dans la composition de la matière en fermentation on peut prévoir des moyens pour mesurer les caractéristiques de la matière contenue dans la cellule de fermentation.

Le dispositif selon l'invention peut de plus comprendre des moyens de chauffage et des moyens d'humidification pour l'air insufflé dans les cellules de fermentation.

D'autres caractéristiques et avantages de l'invention apparaîtront dans la description qui suit d'une de ses formes de réalisation donnée à titre d'exemple non limitatif.

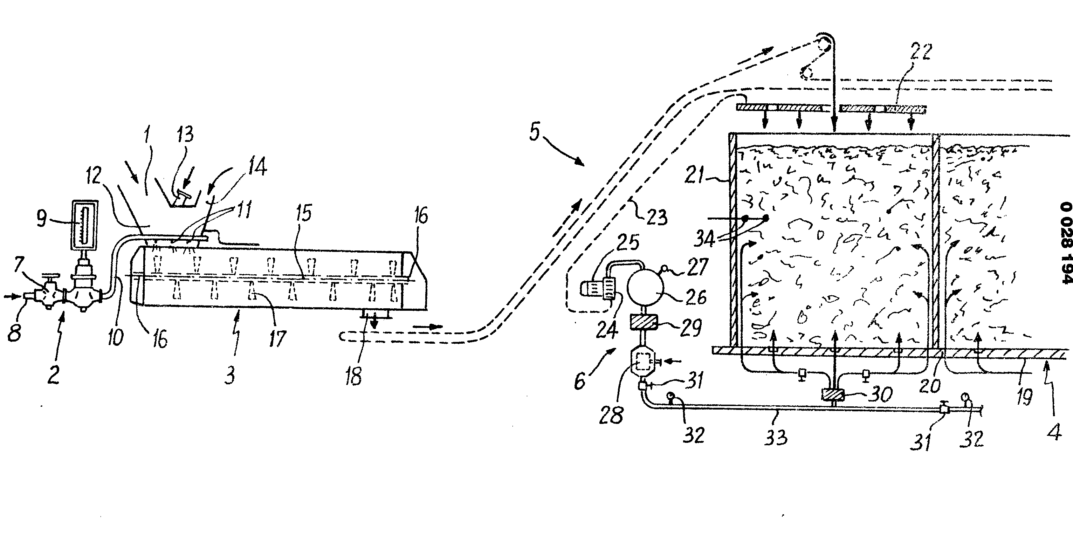

Le dessin annexé représente une installation type du dispositif selon l'invention.

Ce dispositif comprend d'une manière générale un conduit 1 d'arrivée des matières fermentescibles broyées, des moyens d'humidification 2, une enceinte d'homogénéisation 3, des cellules de fermentation 4, un convoyeur 5 permettant d'amener la matière homogénéisée de la sortie de l'enceinte d'homogénéisation jusque dans les cellules de fermentation 4, et des moyens 6 d'insufflation d'air dans les cellules de fermentation.

Les moyens d'humidification 2 comportent dans l'exemple représenté une vanne 7 manuelle ou automatique permettant de régler le débit d'eau qui arrive par une conduite 8. Par ailleurs on a prévu un débitmètre 9 qui permet d'assurer en continu le contrôle visuel du débit. Enfin une canalisation 10 permet d'amener l'eau dont le débit est ainsi dosé à des buses de pulvérisation 11 situées à l'entrée de l'enceinte d'homogénéisation 3.

L'enceinte d'homogénéisation 3 est alimentée par une trémie 12 à l'intérieur de laquelle débouche le conduit d'arrivée des matières fermentescibles broyées 1 de même qu'un conduit d'arrivée de boues 13 et un conduit 14 permettant d'ajouter des matières organiques tels que du lisier, de la sciure, de la paille hachée, de la tourbe ou tout autre produit améliorant la qualité du compost final.

A l'intérieur de l'enceinte d'homogénéisation 3 deux arbres 15 sont montés à rotation sur des paliers 16 et portent des palettes d'homogénéisation 17 qui sont de préférence réglables par tous moyens connus.

A l'extrémité de l'enceinte d'homogénéisation 3 opposée à la trémie 12 se trouve le conduit de sortie 18 des matières humidifiées et homogénéisées.

Du conduit 18, ces matières sont déposées sur le transporteur 5 qui peut comprendre notamment un transporteur à bande. Par ailleurs le transporteur 5 est agencé pour déverser son contenu dans les cellules de fermentation 4.

De préférence les cellules de fermentation 4 ont un volume correspondant à une production journalière. Un ensemble type de cellules comprend donc autant de cellules que de jours sont nécessaires à la fermentation, par exemple 14, plus une en cours de chargement ou de déchargement.

Chaque cellule comporte une dalle en maçonnerie 19 contenant des canalisations d'air 20 et prévue pour supporter la circulation d'un chargeur automoteur à godets. Les parois verticales 21 des cellules peuvent également être maçonnées et sont de préférence calorifugées. L'une de ces parois forme une porte permettant l'extraction des matières fermentées à l'aide par exemple du chargeur à godets précité.

Enfin chaque cellule peut comporter un couvercle qui peut être amovible 22 et qui permet de fermer la cellule et d'installer un échangeur de température pour le réchauffage de l'eau utilisée soit pour le malaxage, soit pour la réhumidification par la base des cellules des matières en fermentation.

Le couvercle 22 permet également de récupérer l'air chaud et humide de la partie haute de la cellule pour éventuellement le recycler grâce aux moyens d'insufflation d'air 6, par l'intermédiaire d'une canalisation 23.

Les moyens d'insufflation d'air 6 comprennent un extracteur d'air non représenté en haut des cellules, un ventilateur 24 actionné par un moteur 25 et éventuellement un ballon de réserve d'air sous pression 26. La pression dans le ballon 26 est contrôlée à l'aide d'un manomètre 27.

Entre le ballon 26 et les cellules de fermentation 4 on a prévu par ailleurs un humidificateur d'air réglable 28 et des moyens de chauffage général 29.

Des moyens de chauffage d'appoint 30 sont également prévus au niveau de chaque cellule, du fait qu'un supplément de calories peut être nécessaire le jour de leur changement malgré le préchauffage de l'eau et de l'air insufflés.

Enfin des vannes 31 associées à des débitmètres 32 permettent de régler la quantité d'air chaud et humide insufflé dans chaque cellule de fermentation. La conduite d'amenée d'air 33 est reliée aux canalisations individuelles 20 de chaque cellule.

Des appareils de contrôle 34 permettent de mesurer notamment la température, la teneur en gaz carbonique et le pH de la masse en fermentation.

Les déchets organiques fermentescibles sont par conséquent introduits par la canalisation 1 dans la trémie 12 où ils peuvent être éventuellement mélangés avec des boues ou d'autres produits organiques. A leur introduction dans l'enceinte d'homogénéisation 3 on leur ajoute par l'intermédiaire des buses de pulvérisation 11 une quantité d'eau ajustée en fonction de leur composition. Ces matières sont ensuite homogénéisées dans l'enceinte 3 d'où elles sont déchargées par l'orifice 18 pour être amenées à l'aide du transporteur 5 dans une cellule de fermentation 4.

Dans cette cellule, les caractéristiques de la masse en fermentation sont mesurées à l'aide des dispositifs 34 et, en fonction de ces caractéristiques, la température et l'humidité de l'air insufflé par les moyens d'insufflation 6 sont réglées à l'aide des moyens de chauffage 29 et 30 et des moyens d'humidification 28 respectivement.

Au bout du temps nécessaire à la fermentation (en principe 14 jours), la cellule de fermentation 4 considérée est ouverte et vidée et les matières fermentées sont disposées en andain par exemple pour permettre leur mûrissement ultérieur.

On constate par conséquent que l'invention permet d'obtenir un compost homogène et mûr avec un minimum de moyens. En effet l'unité d'humidification, de mélange et d'homogénéisation peut être utilisée en continu en étant associée à plusieurs cellules de fermentation. Par ailleurs chacune des cellules de fermentation n'est utilisée que le temps nécessaire à la fermentation de ces déchets puisque le mûrissement est effectué dans un stade ultérieur.

Les moyens d'humidification permettent d'adapter la matière première à son traitement ultérieur et les moyens d'homogénéisation fournissent une matière susceptible de fermenter d'une manière homogène. Enfin les moyens d'insufflation d'air contrôlés permettent de s'affranchir en grande partie des conditions climatiques.

**Revendications**

1. Procédé de compostage de déchets urbains, caractérisé par le fait qu'il consiste à trier et à broyer ces déchets, à mélanger éventuellement aux déchets triés et broyés de l'eau et/ou d'autres produits organiques, tels que du lisier, de la paille hachée ou des boues de décantation, à placer les déchets ainsi traités dans une cellule de fermentation, et à laisser se produire une fermentation aérobique dans la cellule sans retournement ni déplacement en mesurant les caractéristiques de la matière contenue dans la cellule de fermentation et en insufflant dans cette matière un air à humidité et température modulées en fonction des caractéristiques mesurées de la matière pour élever la température de la matière jusqu'à la température de pasteurisation et la maintenir à cette valeur jusqu'à ce que la matière soit pasteurisée.

2. Procédé selon la revendication 1, caractérisé par le fait que l'on met le compost sur aire pour effectuer son mûrissement après la pasteurisation en cellule.

3. Utilisation pour la mise en œuvre du procédé

selon l'une quelconque des revendications 1 et 2, d'un dispositif comprenant au moins une cellule de fermentation, des moyens pour connaître la température et l'humidité de la matière contenue dans cette cellule, des moyens pour insuffler de l'air dans les cellules, des moyens pour modifier les caractéristiques de température et d'hygrométrie de l'air insufflé et des moyens de manutention pour amener les déchets triés et broyés dans les cellules et pour retirer le compost après fermentation.

4. Utilisation selon la revendication 3, d'un dispositif comprenant en outre des moyens pour ajouter aux déchets triés et broyés d'autres matières organiques solides et/ou liquides et des moyens pour homogénéiser le mélange.

5. Utilisation selon la revendication 4, d'un dispositif dans lequel les moyens d'homogénéisation comportent une enceinte à l'intérieur de laquelle au moins un arbre portant des palettes réglables est monté à rotation.

6. Utilisation selon l'une quelconque des revendications 3 à 5, d'un dispositif dans lequel la cellule est de forme parallélépipédique, une de ses parois formant une porte par laquelle la matière fermentée peut être extraite et le sol contenant des canalisations encastrées pour l'amenée de l'air à insuffler.

7. Utilisation selon l'une quelconque des revendications 3 à 6, d'un dispositif comprenant quinze cellules.

## Claims

1. A method of composting town rubbish, characterized by the fact that it consists in sorting and crushing this rubbish, in possibly mixing with the sorted and crushed rubbish water and/or other organic products such as liquid manure, chopped straw or sludge from settling tanks, in placing the rubbish so treated in a fermentation cell and in letting aerobic fermentation occur in the cell without stirring or movement whilst measuring the characteristics of the matter contained in the fermentation cell and blowing into this matter air having a humidity and temperature modulated as a function of the measured characteristics of the matter in order to raise the temperature of the matter up to the pasteurization temperature and keep it at this value until the matter is pasteurized.

2. A method as in Claim 1, characterised by the fact that the compost is put on the floor in order to carry out ripening of it after pasteurization in the cell.

3. Employment for putting into effect the method as in either of the Claims 1 and 2, of a device comprising at least one fermentation cell, means of knowing the temperature and humidity of the matter contained in this cell, means of blowing air into the cells, means of modifying the temperature and hygrometry characteristics of the air blown in and means of handling for bringing the sorted and crushed rubbish into the cells and for withdrawing the compost after fermentation.

4. Employment as in Claim 3, of a device comprising in addition means of adding to the sorted and crushed rubbish other solid and/or liquid organic matter and means of homogenizing the mixture.

5. Employment as in Claim 4, of a device in which the means of homogenization include an enclosure inside which at least one shaft bearing adjustable blades is mounted to be able to rotate.

6. Employment as in any one of the Claims 3 to 5, of a device in which the cell is of parallelepipedal shape, one of its walls forming a door through which the fermented matter may be withdrawn and the floor containing embedded pipework for bringing in the air which is to be blown in.

7. Employment as in any one of the Claims 3 to 6, of a device comprising fifteen cells.

## Ansprüche

1. Verfahren zum Kompostieren von Haushaltsabfällen, dadurch gekennzeichnet, daß die Abfälle ausgesondert und gemahlen werden, daß sie gegebenenfalls mit Abfällen, die ausgesondert und mit Wasser gemahlen wurden und/oder mit anderen organischen Produkten, wie beispielsweise Gülle, gehäckseltem Stroh oder Klärschlamm vermischt werden, daß die so behandelten Abfälle in eine Fermentierzelle gegeben werden, und daß man in dieser Zelle sich eine aerobische Fermentierung entwickeln läßt ohne Umwälzen oder Verlagerung, wobei die Charakteristiken des in der Fermentierzelle enthaltenen Materials gemessen werden und in dieses Material Luft mit einer Feuchtigkeit und einer Temperatur, die in Abhängigkeit von den gemessenen Charakteristiken des Materials verändert wird, eingeblasen wird, um die Temperatur des Materials bis auf die Pasteurisierungstemperatur anzuheben und auf diesem Wert zuhalten, bis das Material pasteurisiert ist.

2. Verfahren nach Anspruch 1, dadurch gekennzeichnet, daß der Kompost nach der Pasteurisierung in der Zelle auf einem freien Platz ausgelegt wird, um seine Reifung durchzuführen.

3. Verwendung einer Vorrichtung für die Durchführung des Verfahrens nach Anspruch 1 oder 2, die mindestens eine Fermentierzelle,,Mittel zum Erfassen der Temperatur und der Feuchtigkeit des in dieser Zelle enthaltenen Materials, Mittel zum Einblasen von Luft in die Zellen, Mittel zum Verändern der Temperatur und des Feuchtigkeitsgehaltes der eingeblasenen Luft und Fördermittel für die Zufuhr der ausgesonderten und gemahlenen Abfälle in die Zellen und für die Entnahme des Kompostes nach Fermentierung aufweist.

4. Verwendung einer Vorrichtung nach Anspruch 3, die zudem Mittel für die Zufuhr von anderen festen und/oder flüssigen organischen Bestandteilen zu den ausgesonderten und gemahlenen Abfällen und Mittel für ein Homogenisieren der Mischung aufweist.

5. Verwendung einer Vorrichtung nach Anspruch 4, bei der die Mittel zum Homogenisieren einen Behälter aufweisen, in dessen Innerem wenigstens eine Welle drehbar angeordnet ist, die einstellbare Flügel oder Schaufeln aufweist.

6. Verwendung einer Vorrichtung nach einem der Ansprüche 3 bis 5, bei der die Zelle die Form eines Parallelepipeds aufweist, von dem eine Wand eine Tür bildet, durch die das fermentierte Material entnommen werden kann und dessen Boden eine eingelassene Kanalisation für die Zufuhr von einzublasender Luft aufweist.

7. Verwendung einer Vorrichtung nach einem der Ansprüche 3 bis 6 mit fünfzehn Zellen.

0 028 194